# EUROPEAN PATENT SPECIFICATION

(11) **EP 1 499 818 B1**
(45) Date of publication and mention of the grant of the patent: **09.11.2005**
(21) Application number: 03722636.2
(22) Date of filing: 30.04.2003
(51) Int. Cl.: F16H 3/72

(54) **ARRANGEMENT FOR DRIVING A COMPRESSOR**
ANORDNUNG ZUM ANTRIEB EINES VERDICHTERS
AGENCEMENT D'ENTRAINEMENT D'UN COMPRESSEUR

(30) Priority: 02.05.2002 FI 20020828
(43) Date of publication of application: 26.01.2005
(73) Proprietor: Sandvik Tamrock Oy, 33330 Tampere (FI)
(72) Inventor: SORMUNEN, Tapani, FIN-33610 Tampere (FI); PÖYSTI, Tapani, FIN-33100 Tampere (FI); PIIPPONEN, Juha, FIN-33240 Tampere (FI); ERKKILÄ, Mikko, FIN-33700 Tampere (FI)
(74) Representative: Kuosmanen, Timo
(86) International application number: PCT/FI2003/000339
(87) International publication number: WO 2003/093699

(56) References cited:
- US-A- 5 512 021
- US-B1- 6 358 172

## Description

### FIELD OF THE INVENTION

The invention relates to a method for driving a compressor of a rock drilling apparatus, the method comprising: rotating power transmission elements by means of a combustion engine; transmitting rotational movement from the power transmission elements to the compressor; controlling the rotational speed of the compressor by means of the power transmission elements to produce desired air flow.

The invention also relates to an arrangement for driving a compressor of a rock drilling apparatus, the arrangement comprising, on a carrier of the rock drilling apparatus, at least: a combustion engine; a compressor, which is arranged to be driven by the combustion engine and which compressor is arranged to produce at least the compressed air required for drilling flushing; power transmission elements, which are connected between the combustion engine and the compressor, to change the rotational speed of the compressor substantially independently of the rotational speed of the combustion engine.
The measures of the preamble of claim 1 and 5, respectively, have to be assumed to be well-known in the mentioned technical field.

### BACKGROUND OF THE INVENTION

A typical rock drilling apparatus comprises a movable carrier, on which there is a drilling boom, the free end of which is provided with a feeding beam and a rock drilling machine. The carrier also comprises a compressor, which provides compressed air used for flushing material separated during drilling away from a drill hole. The amount of flushing air required depends, for instance, on the hardness and quality of the rock to be drilled and on the drilling equipment used.

A motor of a diesel-powered rock drilling apparatus is usually designed to be driven with a predetermined, substantially constant rotational speed. It is, however, advantageous if the rotational speed of the compressor can, if necessary, be changed independently of the rotational speed of the motor. In a known solution, a fully hydrostatic power transmission is provided between a diesel engine and a compressor. In such a case, the diesel engine drives a hydraulic pump which provides hydraulic fluid flow, which is further led to a hydraulic motor, which, in turn, rotates the compressor. The rotational speed of the compressor is controlled by regulating the flow to be led to the hydraulic motor, typically by regulating the volume flow produced by the hydraulic pump. This solution thus allows the controlling of the rotational speed of the compressor but, unfortunately, it has a serious disadvantage of poor operational efficiency, as rotation is first entirely converted to hydraulic power and then back to rotation. A further problem is that the components of the hydraulic system are dimensioned large, which is why they take up a lot of space on the carrier and are expensive.

### BRIEF DESCRIPTION OF THE INVENTION

It is an object of the present invention to provide a new and improved arrangement for driving a compressor of a rock drilling apparatus by means of a combustion engine.

The method of the invention is defined by the measures of claim 1.

The arrangement of the invention is defined by the features of claim 5.

The essential idea of the invention is that a planetary gear is arranged between a combustion engine and a compressor. Consequently, the combustion engine is connected to one of the three shafts of the planetary gear and, correspondingly, the compressor is connected to some other shaft of the planetary gear. The third shaft of the planetary gear, for its part, is connected to an actuator, which can affect the rotation of that shaft. By changing the rotational speed of the shaft connected to the actuator, the rotational speed to be transmitted from the combustion engine to the compressor can be controlled. Due to the planetary gear, the rotational speed of the compressor is proportional to the sum of the rotational speeds of the shaft connected to the combustion engine and the shaft connected to the actuator.

The invention provides the advantage that by means of a planetary gear, the rotational speed of the compressor can be controlled in various ways. Thus, the compressor connected to the planetary gear is driven with such a rotational speed that provides an exactly suitable air flow for each purpose. In this way, capacity will not be wasted. With respect to fully hydrostatic power transmission, another significant advantage is that a clearly better operational efficiency is achieved with the invention. Therefore, by applying the invention, fuel costs of a rock drilling apparatus can be reduced considerably.

The essential idea of an embodiment of the invention is that the actuator decelerates the shaft connected to the actuator. This type of solution has the advantage that, for example, the structure is simple and cheap. In addition, it is fairly easy to steer the actuator.

The essential idea of an embodiment of the invention is that the actuator rotates the shaft connected to the actuator with a desired rotational speed and in the desired rotational direction. This solution allows a very wide range of rotational speeds.

The essential idea of an embodiment of the invention is that the combustion engine is arranged to drive a hydraulic pump and that the actuator is a hydraulic motor, which is driven by hydraulic fluid flow produced with said hydraulic pump. By controlling the hydraulic fluid flow to be fed to the hydraulic motor, the rotational speed and, if desired, the rotational direction of the shaft connected to the actuator can be affected. With respect to fully hydrostatic power transmission, this solution can utilise hydraulic components which are considerably smaller and cheaper. It is also possible to arrange at least one valve in a hydraulic fluid channel between the hydraulic pump and the hydraulic motor so that the hydraulic motor can be connected to free rotation. In this case, it is easy to stop the compressor, if necessary, by using this valve. This solution allows that air flow produced by the compressor can be controlled in various ways during drilling and provides a simple solution for stopping and switching the compressor off during the starting of the combustion engine, for instance.

### BRIEF DESCRIPTION OF THE INVENTION

The invention will be explained in more detail in the attached drawings, in which
Figure 1 schematically shows a side view of a rock drilling apparatus, to which a solution of the invention can be applied,
Figure 2 schematically shows a solution of the invention for driving a compressor of the rock drilling apparatus,
Figures 3 to 7 schematically show alternative ways of the invention for connecting a combustion engine, a compressor and an actuator to three different shafts of a planetary gear,
Figure 8 schematically shows a second solution of the invention, and
Figure 9 schematically shows a third solution of the invention.

The invention is simplified in the figures for the sake of clarity. Like parts are marked with the same reference numerals in the figures.

### DETAILED DESCRIPTION OF THE INVENTION

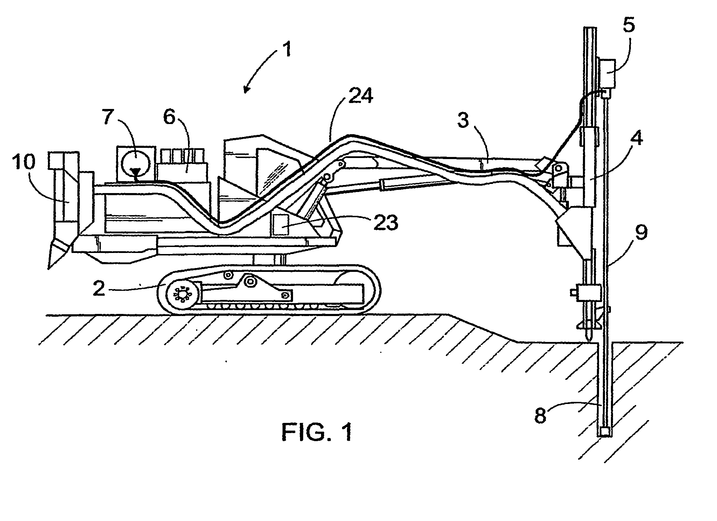

Figure 1 shows a structure of a rock drilling apparatus 1. The rock drilling apparatus 1 comprises a movable carrier 2, which is provided with a boom 3, a feeding beam 4 at the free end of the boom 3 and also a rock drilling machine 5, which can be moved with respect to the feeding beam 4. The rock drilling apparatus 1 is driven by a combustion engine 6 arranged on the carrier 2, which makes the rock drilling apparatus 1 an independent unit. The combustion engine 6 is typically a diesel engine. The power provided by the combustion engine 6 is used, for instance, for moving the carrier 2 and as a power source for hydraulic pumps and for an electric generator. It is also used for driving a compressor 7. Compressed air formed with the compressor 7 is used for flushing a drill hole 8. Compressed air is thereby fed via a flushing air channel 24 to the rock drilling machine 5 and further through a drilling rod 9 into the drill hole 8, whereby the compressed air pushes chippings separated from the rock out of the drill hole 8. At the collar of the drill hole 8, the chippings are sucked via tubes of a collector system to a dust separator 10. Compressed air can also be used for lubricating the shank of the rock drilling machine 5 to form the required oil mist.

For instance, during transportation of the carrier 2, positioning of the boom 3, replacements of the drill rods and whenever the rock drilling machine 5 is not used for drilling, the compressor can be used with a lower power, because no flushing is required and there is scarcely a need for lubricating the shank of the drilling machine. Furthermore, when the rock to be drilled is hard, a smaller amount of chippings is separated from it, and so the need for flushing is smaller. By contrast, lot of chippings are separated from soft rock, which is why the chippings must be flushed away from the drill hole 8 effectively so that the drill bit and the drill rods do not get stuck in the drill hole. For the above mentioned reason, a strong flow of flushing air should also be used when rock of poor quality is drilled. On the other hand, as the amount of flushing air can be efficiently controlled with the invention, it is possible to avoid the harmful excessive flushing of the drill hole, which is known to cause, for instance, premature wearing of the drill bit and to impair the quality of the drill hole. The rock drilling apparatus 1 can also comprise a system for recognising the rock type, whereby the requirements set by the rock type and quality can be taken into careful consideration when the flushing and the compressor are controlled. By using suitable sensors, a control apparatus 23 monitors or otherwise defines various subprocesses of rock drilling and defines the rock type on the basis of the obtained information and the data prestored in the control apparatus 23.

According to generally known principles, the rate of air flow produced by the compressor 7 can be regulated in two ways: either by controlling the rotational speed of the compressor 7 or by keeping the rotational speed constant and choking the flow of supply or exhaust air of the compressor 7 with a valve. In the latter case, power that is constantly substantially of the same magnitude is used for driving the compressor 7. In the invention, on the other hand, the rotational speed of the compressor 7 is controlled such that the air flow produced by the compressor 7 corresponds to the demand of that moment. When the flushing need is small, the compressor 7 uses only a small amount of power, whereby also the combustion engine 6 consumes less fuel. In addition, the compressor 7 and the combustion engine 6 are not constantly loaded with a full load, which means that they have longer operating lives and need not be serviced so often. A considerable advantage is also that other actuators of the rock drilling apparatus 1 can utilise the power released from the compressor 7. Thus, it is possible to dimension the combustion engine 6 of the rock drilling apparatus 1 so that its power is somewhat lower than before, which makes it cheaper and smaller. When, for instance, the booms 3 are moved, hydraulic power is needed, but only a small amount or no flushing air at all is required. The same happens when, for instance, the carrier 2 is moved, whereby the power released from the compressor 7 is guided to be used in mechanical or hydraulic power transmission.

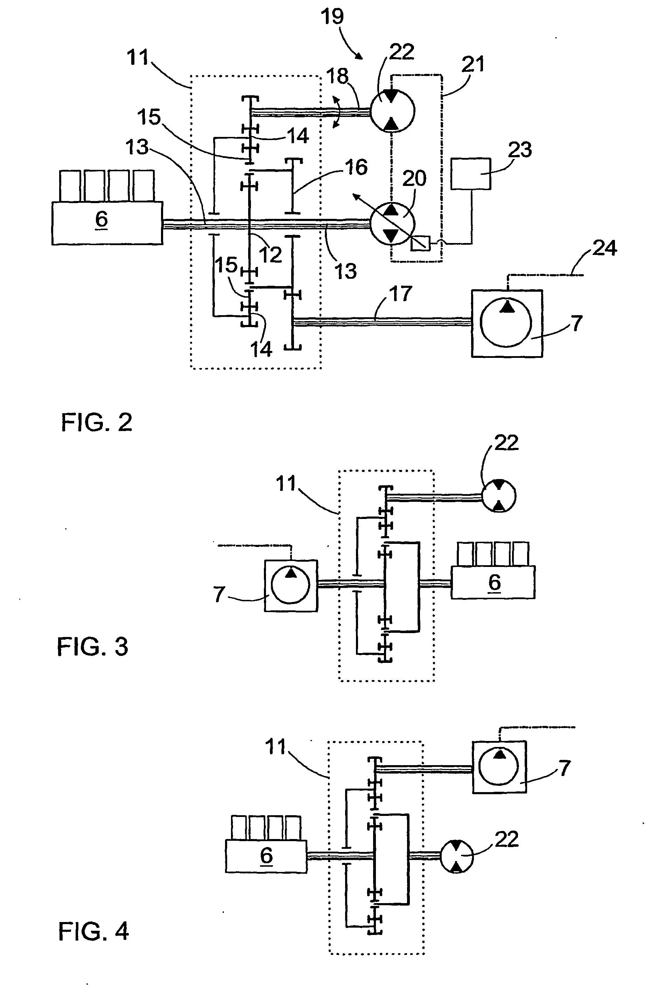

Figure 2 shows an arrangement for driving the compressor 7 of the rock drilling apparatus 1. The combustion engine 6 drives the compressor 7 via a planetary gear 11. The innermost element of the planetary gear 11 is a sun wheel 12 with external toothing. The sun wheel 12 is connected to a first shaft 13 of the planetary gear, the first shaft being further connected to the combustion engine 6. The outermost element of the planetary gear 11 is a ring gear 14 with internal toothing. Further, between the sun wheel 12 and the ring gear 14 there are two or more planet wheels 15, which have external toothing and which are each pivoted rotatably around their axis. The planet wheels 15 are in constant contact with the sun wheel 12 and, correspondingly, to the ring gear 14. The planet wheels 15 are connected to each other by means of a planet wheel carrier 16. The planet wheel carrier 16 is connected to a second shaft 17 of the planetary gear 11, the second shaft being further connected to drive the compressor 7. The ring gear 14 is connected to a third shaft 18 of the planetary gear 11, the third shaft being further connected to an actuator 19. Although the structure and operational principle of the planetary gear 11 are known per se, some principles related thereto are explained herein. Depending on the relative speeds of the sun wheel 12 and of the ring gear 14, the planet wheels 15 can rotate in their places around their axis. On the other hand, the speeds of the sun wheel 12 and of the ring gear 14 can be adapted with respect to each other so that the planet wheels 15 rotate around their axis and, at the same time, circulate around the ring gear 14 on its inner circle, whereby also the planet wheel carrier 16 rotates.

Figure 2 also shows that a hydraulic pump 20, by which hydraulic fluid flow is formed in a hydraulic circuit 21, is arranged on the same shaft with the sun wheel 12. The volume of the hydraulic pump 20 can preferably be controlled by the control apparatus 23 so that a desired hydraulic fluid flow is fed to the hydraulic circuit 21. In the solution of Figure 2, the actuator 19 is a hydraulic motor 22, which is connected to the hydraulic circuit 21 and driven by hydraulic fluid flow formed with the hydraulic pump 20. By guiding a strong hydraulic fluid flow to the hydraulic motor 22, the ring gear 14 of the planetary gear 11 is made to rotate with high speed and, correspondingly, when the hydraulic fluid flow is weak, the speed of the ring gear 14 is low. The planetary gear 11 sums the rotational speed caused by the combustion engine 6 and the rotational speed achieved with the hydraulic motor 22 and transmits the summed rotational speed to the compressor 7. By driving the hydraulic motor 22 in the opposite rotational direction with respect to the combustion engine 6, the rotational speed summed in the compressor 7 is lower than the rotational speed of the combustion engine 6.

In addition to drilling variables of the rock drilling machine 5, the control apparatus 23 is arranged to control the operation of the actuator 19. The control apparatus 23 preferably controls the actuator 19 with respect to the percussion power of the rock drilling machine 5. In this case, information on rock types is taken into account when the flushing is controlled. Other types of control strategies can also be stored in the control apparatus 23 to control the compressor and the flushing. As Figure 1 shows, the control apparatus 23 is preferably arranged in connection with the control cabin of the rock drilling apparatus 1. The control apparatus 23 is preferably a computer or a similar device.

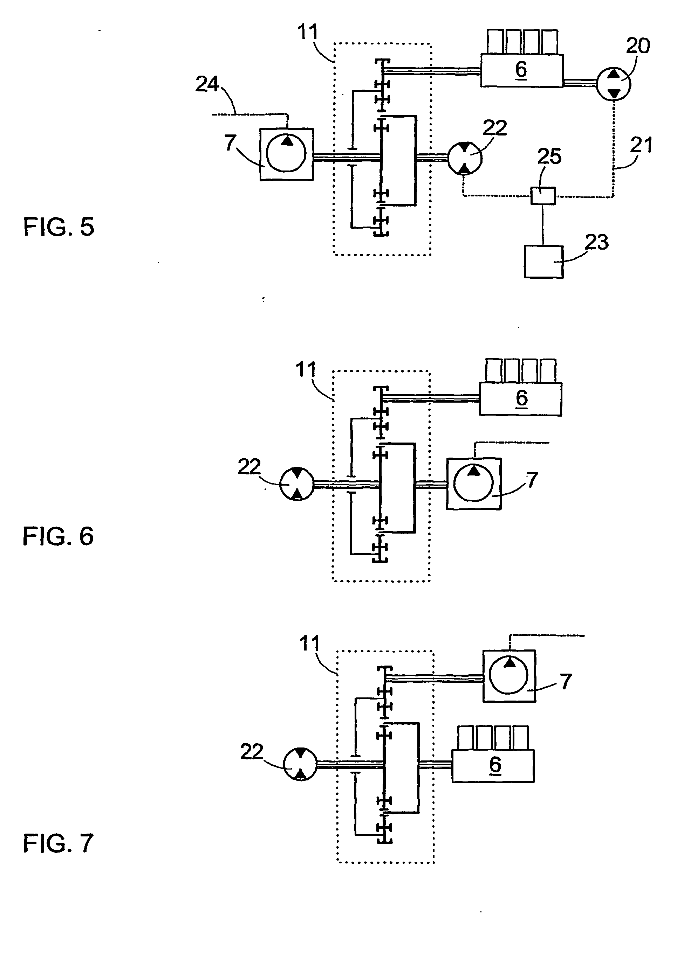

Figures 2 to 7 show alternative ways of connecting the combustion engine 6, the compressor 7 and the actuator 19 to the three shafts 13, 17, 18 of the planetary gear 11. The solution of Figure 5 differs from the solutions shown in Figures 2, 3, 4, 6 and 7 in that the hydraulic pump 20 is arranged to be directly driven by the combustion engine 6. Furthermore, the hydraulic pump 20 of Figure 5 is a constant volume pump, whereby hydraulic fluid flow supplied to the hydraulic motor 22 is controlled by means of a valve 25 arranged in the hydraulic circuit 21.

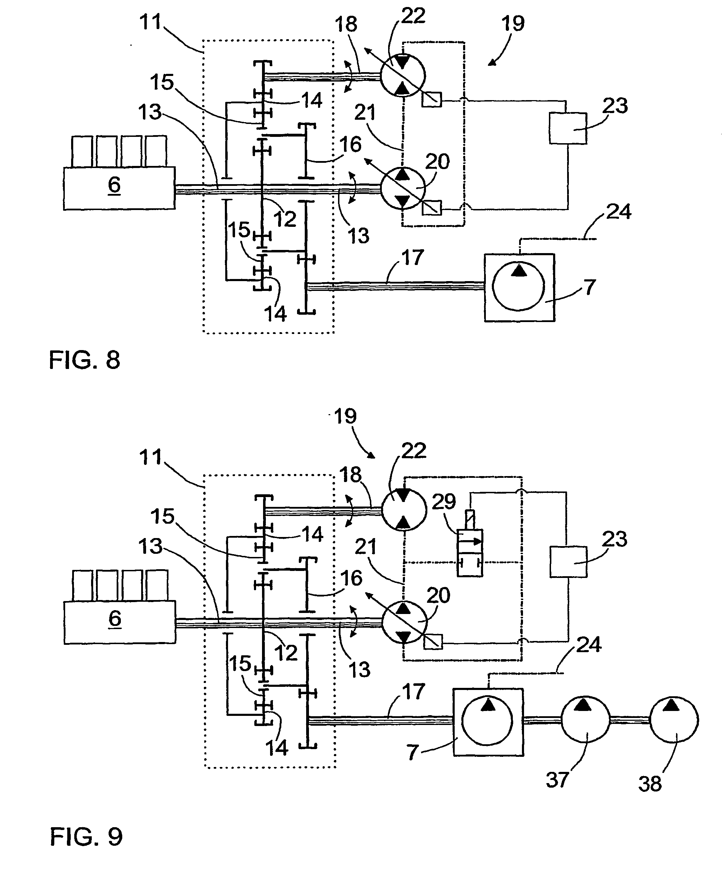

In Figure 8, the hydraulic pump 20 is arranged to be driven by the shaft 13. The actuator 19 comprises the hydraulic motor 22, which is connected to the third shaft 18 of the planetary gear 11, i.e. to be driven by the ring gear 14. The volumes of the pump 20 and of the motor 22 can be controlled by means of the control apparatus 23. The volume can preferably be controlled continuously. Between the hydraulic pump 20 and the hydraulic motor 22 there is a closed hydraulic circuit 21. When the hydraulic motor 22 and the hydraulic pump 20 are set to zero volume, the compressor 7 is stopped. When the hydraulic motor 22 is set to zero volume, it rotates freely and causes only minimal torque, whereby the compressor 7 stops almost completely. The solution provides the advantage that the combustion engine 6 can be started substantially without loading torque. In conventional equipment, the loading torque loads particularly the starter motor of the combustion engine 6. During the starting, the hydraulic motor 22 is thus set to zero volume, whereby the hydraulic motor 22 starts to rotate during the starting only when loaded by idling frictions and inertial forces. After the combustion engine 6 is started, the compressor 7 is switched on by setting the volume of the hydraulic motor 22 to a production position, away from zero volume, by using the control apparatus 23. Thus, the compressor 7 starts to rotate with a rotational speed transmitted mechanically via the planetary gear 11. The controlling of the rotational speed of the compressor 7 affects the amount of air to be produced. The rotational speed of the compressor 7 is controlled by controlling the volume of the hydraulic pump 20. When no flushing air is required, i.e. when, for instance, the rock drilling apparatus 1 and the drill beam 3 are moved and the drilling tools are handled, the compressor 7 can be stopped by setting the hydraulic motor 22 to zero volume by using the control apparatus 23. After the stopping, the compressor 7 is switched on by setting the hydraulic motor 22 to produce hydraulic pressure to the hydraulic circuit 21.

Figure 9 shows an arrangement similar to Figure 2, wherein the combustion engine 6 drives the sun wheel 12 and the planet wheel carrier 16 drives the compressor 7. Furthermore, the hydraulic pump 20, by which hydraulic fluid flow is formed in the closed hydraulic circuit 21, is connected to the sun wheel 12. The volume of the hydraulic pump 20 can be controlled with the control apparatus 23, preferably continuously. The hydraulic motor 22 connected onto the ring gear 14 of the planetary gear 11 is connected to the hydraulic circuit 21. The rotational speed of the compressor 7 and the rate of air flow to be produced are affected by controlling the hydraulic fluid flow achieved with the hydraulic pump 20. The hydraulic circuit 21 is further provided with a control valve 29, which is controlled by the control apparatus 23. In the upper position shown in Figure 9, the control valve 29 has no effect on the operation of the system. When the compressor 7 is to be stopped completely in order to move the rock drilling apparatus 1, for instance, the control valve 29 in Figure 9 is moved down, whereby the working pressure channel and the return channel connected to the hydraulic motor 22 are shorted out. Hydraulic fluid can thus flow freely between the hydraulic channels connected to the hydraulic motor 22. Thus, the hydraulic motor 22 can rotate freely and the compressor 7 is stopped. In addition to the control valve 29, the hydraulic circuit 21 can be provided with a pressure relief valve, which allows the hydraulic fluid flow to pass from the working pressure channel of the hydraulic motor 22 to the return channel in case of potential pressure strokes occur.

In the solutions of Figures 8 and 9, the compressor 7 can be conveniently switched out of operation during the starting of the combustion engine 6, in which case the combustion engine can be started with low starting torque, which is a considerable advantage particularly in cold operational conditions. In addition, the solutions allow that the compressor 7 can be conveniently switched out of operation when compressed air is not needed. The power released from the compressor 7 can be utilised in other actuators of the rock drilling apparatus. The combustion engine 6 can also be used with a low idle-run power when the compressor 7 is switched off. As to the manufacture and control, the shown structures are also airly simple.

As Figure 9 shows, other rotatable devices can be arranged on the same shaft with the compressor 7. In this case, the shaft 17 of the planetary gear also drives a pump 37 of a dust separator 10 and a pump 38 of cooling equipment. Like flushing, also dust separation and cooling depend on the drilling situation, and so it is simplest to control these apparatuses as one whole by affecting the rotational speed of the shaft 17 of the planetary gear 11 by means of the actuator 19.

The drawings and the related description are only intended to illustrate the idea of the invention. In its details, the invention can vary within the scope of the claims.

## Claims

1. A method for driving a compressor of a rock drilling apparatus, the method comprising:
rotating power transmission elements by means of a combustion engine (6),
transmitting rotational movement from the power transmission elements to the compressor (7),
controlling the rotational speed of the compressor (7) by means of the power transmission elements to produce desired air flow,
**characterized by**
bringing the rotational movement from the combustion engine (6) to a shaft of a planetary gear (11) and transmitting the rotational movement from a second shaft of the planetary gear (11) to the compressor (7),
affecting the rotation of a third shaft of the planetary gear (11) by means of at least one actuator (19), and
rotating the compressor (7) with a rotational speed which is proportional to the sum of the rotational speeds of the shaft connected to the combustion engine (6) and the shaft connected to the actuator (19).

2. A method as claimed in claim 1, **characterized by** decelerating the rotation of the shaft connected to the actuator by means of the actuator (19).

3. A method as claimed in claim 1, **characterized by** rotating the shaft connected to the actuator with a desired speed by means of the actuator (19).

4. A method as claimed in claim 3, **characterized by** rotating the shaft connected to the actuator in the desired rotational direction by means of the actuator (19).

5. An arrangement for driving a compressor of a rock drilling apparatus, the arrangement comprising, on a carrier (2) of the rock drilling apparatus (1), at least:
a combustion engine (6),
a compressor (7), which is arranged to be driven by the combustion engine (6) and which compressor (7) is arranged to produce at least the compressed air required for drilling flushing,
power transmission elements, which are connected between the combustion engine (6) and the compressor (7), to change the rotational speed of the compressor (7) substantially independently of the rotational speed of the combustion engine (6),
**characterized in that**
the power transmission elements comprise at least a planetary gear (11) comprising at least a sun wheel (12), two or more planet wheels (15), a planet wheel carrier (16), a ring gear (14), and further a first shaft (13) connected to the sun wheel (12), a second shaft (17) connected to the planet wheel carrier (16) and a third shaft (18) connected to the ring gear (14),
that the combustion engine (6) is connected to one of the shafts of the planetary gear (11) and, correspondingly, the compressor (7) is connected to another one of the shafts of the planetary gear (11), and
that the arrangement comprises at least one actuator (19) which is connected to the third shaft of the planetary gear (11), which actuator (19) is arranged to affect the rotation of this shaft and, simultaneously, to affect the magnitude of the rotational speed and torque transmitted from the combustion engine (6) to the compressor (7).

6. An arrangement as claimed in claim 5, **characterized in that** the rotational speed of the compressor (7) is arranged to be adjusted with respect to the percussion power of the rock drilling machine (5) of the rock drilling apparatus (1) inversely proportionally in such a manner that when the percussion power of the rock drilling machine (5) is high, the rotational speed and air production of the compressor (7) are low, and vice versa.

7. An arrangement as claimed in claim 5 or 6, **characterized in**
**that** the arrangement comprises a hydraulic pump (20) and a hydraulic circuit (21), whereby the hydraulic pump (20), driven by the combustion engine (6), is arranged to form hydraulic fluid flow in the hydraulic circuit (21),
**that** the actuator (19) is a hydraulic motor (22), which is arranged to be driven by hydraulic fluid flow formed by the hydraulic pump (20), and
**that** the rotational speed of the compressor (7) is proportional to the sum of the rotational speeds of the combustion engine (6) and the hydraulic motor (22).

8. An arrangement as claimed in claim 7, **characterized in that** the hydraulic circuit (21) comprises at least one valve (29) to short-circuit the working pressure channel and the return channel connected to the hydraulic motor (22).

9. An arrangement as claimed in claim 5 or 6, **characterized in that** the actuator (19) comprises a mechanical brake to affect the rotation of the shaft connected to the actuator (19).

10. An arrangement as claimed in any one of the preceding claims 5 to 9, **characterized in that** at least one other rotating apparatus (37, 38) is arranged to be rotated by the same shaft as the compressor (7).

## Patentansprüche

1. Verfahren zum Antreiben eines Kompressors einer Gesteinsbohrvorrichtung, wobei das Verfahren umfasst:
Drehen von Energieübertragungselementen mittels einer Brennkraftmaschine (6),
Übertragen einer Drehbewegung von den Energieübertragungselementen zum Kompressor (7),
Steuern der Drehgeschwindigkeit des Kompressors (7) mittels der Energieübertragungselemente, um einen gewünschten Luftstrom zu erzeugen,
**gekennzeichnet durch**
Bringen der Drehbewegung von der Brennkraftmaschine (6) zu einer Welle eines Planetengetriebes (11), und Übertragen der Drehbewegung von einer zweiten Welle des Planetengetriebes (11) zum Kompressor (7),
Beeinflussen der Drehung einer dritten Welle des Planetengetriebes (11) mittels mindestens eines Aktuators (19), und
Drehen des Kompressors (7) mit einer Drehgeschwindigkeit, die proportional zur Summe der Drehgeschwindigkeiten der mit der Brennkraftmaschine (6) verbundenen Welle und der mit dem Aktuator (19) verbundenen Welle ist.

2. Verfahren nach Anspruch 1, **gekennzeichnet durch** Verlangsamen der Drehung der mit dem Aktuator verbundenen Welle mittels des Aktuators (19).

3. Verfahren nach Anspruch 1, **gekennzeichnet durch** Drehen der mit dem Aktuator verbundenen Welle mit einer gewünschten Geschwindigkeit mittels des Aktuators (19).

4. Verfahren nach Anspruch 3, **gekennzeichnet durch** Drehen der mit dem Aktuator verbundenen Welle in der gewünschten Drehrichtung mittels des Aktuators (19).

5. Anordnung zum Antreiben eines Kompressors einer Gesteinsbohrvorrichtung, wobei die Anordnung auf einer Trägervorrichtung (2) der Gesteinsbohrvorrichtung (1) mindestens umfasst:
eine Brennkraftmaschine (6),
einen Kompressor (7), der so angeordnet ist, dass er durch die Brennkraftmaschine (6) angetrieben wird, und welcher Kompressor (7) so angeordnet ist, dass er mindestens die Druckluft erzeugt, die zur Bohrspülung erforderlich ist,
Energieübertragungselemente, die zwischen der Brennkraftmaschine (6) und dem Kompressor (7) verbunden sind, um die Drehgeschwindigkeit des Kompressors (7) im Wesentlichen unabhängig von der Drehgeschwindigkeit der Brennkraftmaschine (6) zu ändern,
**dadurch gekennzeichnet,**
**dass** die Energieübertragungselemente mindestens ein Planetengetriebe (11) umfassen, umfassend mindestens ein Sonnenrad (12), zwei oder mehr Planetenräder (15), einen Planetenradträger (16), ein Hohlrad (14) und weiter eine erste Welle (13), die mit dem Sonnenrad (12) verbunden ist, eine zweite Welle (17), die mit dem Planetenradträger (16) verbunden ist, und eine dritte Welle (18), die mit dem Hohlrad (14) verbunden ist,
**dass** die Brennkraftmaschine (6) mit einer der Wellen des Planetengetriebes (11) verbunden ist und entsprechend der Kompressor (7) mit einer anderen der Wellen des Planetengetriebes (11) verbunden ist, und
**dass** die Anordnung mindestens einen Aktuator (19) umfasst, der mit der dritten Welle des Planetengetriebes (11) verbunden ist, welcher Aktuator (19) angeordnet ist, um die Drehung dieser Welle zu beeinflussen und gleichzeitig die Größe der Drehgeschwindigkeit und des Drehmoments, das von der Brennkraftmaschine (6) zum Kompressor (7) übertragen wird, zu beeinflussen.

6. Anordnung nach Anspruch 5, **dadurch gekennzeichnet, dass** die Drehgeschwindigkeit des Kompressors (7) so eingerichtet ist, dass sie mit Bezug auf die Schlagkraft der Gesteinsbohrmaschine (5) der Gesteinsbohrvorrichtung (1) umgekehrt proportional auf eine solche Weise eingestellt ist, dass, wenn die Schlagkraft der Gesteinsbohrmaschine (5) hoch ist, die Drehgeschwindigkeit und Lufterzeugung des Kompressors (7) niedrig sind, und umgekehrt.

7. Anordnung nach Anspruch 5 oder 6, **dadurch gekennzeichnet,**
**dass** die Anordnung eine Hydraulikpumpe (20) und einen Hydraulikkreis (21) umfasst, wodurch die Hydraulikpumpe (20), die durch die Brennkraftmaschine (6) angetrieben wird, so angeordnet ist, dass sie einen Hydraulikfluidstrom im Hydraulikkreis (21) bildet,
**dass** der Aktuator (19) ein Hydraulikmotor (22) ist, der so angeordnet ist, dass er durch einen Hydraulikfluidstrom angetrieben wird, der durch die Hydraulikpumpe (20) gebildet wird, und
**dass** die Drehgeschwindigkeit des Kompressors (7) proportional zur Summe der Drehgeschwindigkeiten der Brennkraftmaschine (6) und des Hydraulikmotors (22) ist.

8. Anordnung nach Anspruch 7, **dadurch gekennzeichnet, dass** der Hydraulikkreis (21) mindestens ein Ventil (29) umfasst, um den Arbeitsdruckkanal und den Rückkehrkanal, die mit dem Hydraulikmotor (22) verbunden sind, kurzzuschließen.

9. Anordnung nach Anspruch 5 oder 6, **dadurch gekennzeichnet, dass** der Aktuator (19) eine mechanische Bremse umfasst, um die Drehung der mit dem Aktuator (19) verbundenen Welle zu beeinflussen.

10. Anordnung nach einem der vorangehenden Ansprüche 5 bis 9, **dadurch gekennzeichnet, dass** mindestens eine andere Drehvorrichtung (37, 38) so angeordnet ist, dass sie durch dieselbe Welle wie der Kompressor (7) gedreht wird.

## Revendications

1. Procédé pour entraîner un compresseur d'un appareil de forage de roche, comprenant :
la rotation des éléments de transmission de puissance au moyen d'un moteur à combustion (6) ;
la transmission du mouvement de rotation des éléments de transmission de puissance au compresseur (7),
le contrôle de la vitesse de rotation du compresseur (7) au moyen des éléments de transmission de puissance pour produire le débit d'air souhaité,
**caractérisé par**
la transmission du mouvement de rotation du moteur à combustion (6) à un arbre d'un engrenage planétaire (11) et la transmission du mouvement de rotation d'un second arbre de l'engrenage planétaire (11) au compresseur (7),
la modification de la rotation d'un troisième arbre de l'engrenage planétaire (11) par le biais d'au moins un actionneur (19), et
la rotation du compresseur (7) à une vitesse de rotation qui est proportionnelle à la somme des vitesses de rotation de l'arbre relié au moteur à combustion (6) et de l'arbre relié à l'actionneur (19).

2. Procédé selon la revendication 1, **caractérisé par** la décélération de la rotation de l'arbre relié à l'actionneur au moyen de l'actionneur (19).

3. Procédé selon la revendication 1, **caractérisé par** la rotation dudit arbre relié à l'actionneur à une vitesse souhaitée au moyen de l'actionneur (19).

4. Procédé selon la revendication 3, **caractérisé par** la rotation de l'arbre relié à l'actionneur dans la direction de rotation souhaitée au moyen de l'actionneur (19).

5. Agencement pour entraîner un compresseur d'un appareil de forage de roche, l'agencement comprenant, sur un support (2) de l'appareil de forage de roche (1), au moins :
un moteur à combustion (6),
un compresseur (7), qui est agencé pour être entraîné par le moteur à combustion (6), lequel compresseur (7) étant agencé pour produire au moins l'air comprimé requis pour un nettoyage de forage,
des éléments de transmission de puissance, qui sont reliés entre le moteur à combustion (6) et le compresseur (7), pour modifier la vitesse de rotation du compresseur (7) de façon sensiblement indépendante à la vitesse de rotation du moteur à combustion (6),
**caractérisé en ce que**
les éléments de transmission de puissance comprennent au moins un engrenage planétaire (11) comprenant au moins une roue solaire (12), deux ou plusieurs roues satellites (15), un support de roue satellite (16), une couronne (14), et en outre, un premier arbre (13) relié à la roue solaire (12), un second arbre (17) relié au support de roue satellite (16) et un troisième arbre (18) relié à la couronne (14),
le moteur à combustion (6) est relié à l'un des arbres de la roue satellite (11) et, de façon correspondante, le compresseur (7) est relié à un autre des arbres de l'engrenage planétaire (11), et
l'agencement comprend au moins un actionneur (19) qui est relié au troisième arbre de l'engrenage planétaire (11), lequel actionneur (19) est agencé pour affecter la rotation dudit arbre et, simultanément, pour affecter l'importance de la vitesse de rotation et du couple transmis du moteur à combustion (6) au compresseur (7).

6. Agencement selon la revendication 5, **caractérisé en ce que** la vitesse de rotation du compresseur (7) est conçue pour être ajustée par rapport à la puissance de percussion de la foreuse (5) de l'appareil de forage de roche (1) de façon inversement proportionnelle de telle manière que lorsque la puissance de percussion de la foreuse (5) est élevée, la vitesse de rotation et la production d'air du compresseur (7) sont faibles, et vice versa.

7. Agencement selon la revendication 5 ou 6, **caractérisé en ce que**
l'agencement comprend une pompe hydraulique (20) et un circuit hydraulique (21), moyennant quoi la pompe hydraulique (20), entraînée par le moteur à combustion (6), est agencée pour former un écoulement de fluide hydraulique dans le circuit hydraulique (21),
l'actionneur (19) est un moteur hydraulique (22), qui est agencé pour être entraîné par l'écoulement de fluide hydraulique formé par la pompe hydraulique (20), et
la vitesse de rotation du compresseur (7) est proportionnelle à la somme des vitesse de rotation du moteur à combustion (6) et du moteur hydraulique (22).

8. Agencement selon la revendication 7, **caractérisé en ce que** le circuit hydraulique (21) comprend au moins une soupape (29) pour court-circuiter le canal de pression d'utilisation et le canal de retour reliés au moteur hydraulique (22).

9. Agencement selon la revendication 5 ou 6, **caractérisé en ce que** l'actionneur (19) comprend un frein mécanique pour affecter la rotation de l'arbre relié à l'actionneur (19).

10. Agencement selon l'une quelconque des revendications précédentes 5 à 9, **caractérisé en ce qu'**au moins un autre appareil de rotation (37, 38) est agencé pour être mis en rotation par le même arbre que le compresseur (7).
